# EUROPEAN PATENT APPLICATION

(11) **EP 4 044 453 A1**
(43) Date of publication of application: **17.08.2022**
(21) Application number: 20867594.2
(22) Date of filing: 29.09.2020
(51) Int. Cl.: H04B 7/185

(54) **INFORMATION INDICATION METHOD AND APPARATUS AND COMPUTER-READABLE STORAGE MEDIUM**

(30) Priority: 29.09.2019 CN 201910936780
(71) Applicant: ZTE Corporation, Shenzhen, Guangdong 518057 (CN)
(72) Inventor: YANG, Zhen, Shenzhen, Guangdong 518057 (CN); CAO, Wei, Shenzhen, Guangdong 518057 (CN); ZHANG, Nan, Shenzhen, Guangdong 518057 (CN); TIAN, Kaibo, Shenzhen, Guangdong 518057 (CN)
(74) Representative: Iannone, Carlo Luigi
(86) International application number: PCT/CN2020/118826
(87) International publication number: WO 2021/058025

(57) **Abstract**

Provided are an information indication method and apparatus and a computer-readable storage medium. The information indication method includes that a first communication node sends first indication information including elevation information and residence information of a beam.

## Description

This application claims priority to Chinese Patent Application No. 201910936780.3 filed with the China National Intellectual Property Administration (CNIPA) on Sep. 29, 2019, the disclosure of which is incorporated herein by reference in its entirety.

### TECHNICAL FIELD

The present application relates to radio communication networks, for example, an information indication method and apparatus and a computer-readable storage medium.

### BACKGROUND

In a low Earth orbiting (LEO) satellite communication system, a multi-beam coverage scheme is adopted. Since an LEO satellite moves at a high speed, multiple beams under one satellite will sweep across the ground with the trajectory of the one satellite so that a terminal device frequently undergoes the switching of serving beams. However, during beam switching of the terminal device, a large signaling overhead is generated or frequency hopping occurs, resulting in a significant decrease in communication efficiency.

### SUMMARY

The present application provides an information indication method and apparatus and a computer-readable storage medium, which can improve communication efficiency of an LEO satellite communication network.

An embodiment of the present application provides an information indication method including the following.

A first communication node sends first indication information including elevation information of a beam and residence information of the beam.

An embodiment of the present application provides an information indication method including the following.

A second communication node receives first indication information of a beam, where the first indication information is sent by a first communication node and includes elevation information of a beam and residence information of the beam.

An embodiment of the present application provides an information indication method including the following.

A first communication node sends second indication information to a second communication node, where the second indication information includes frequency offset pre-compensation information for beam switching of the second communication node.

An embodiment of the present application provides an information indication method including the following.

A second communication node receives second indication information sent by a first communication node, where the second indication information includes frequency offset pre-compensation information for beam switching of the second communication node.

An embodiment of the present application provides an information indication apparatus including a processor configured to, when executing a computer program, implement the method according to any one of the preceding embodiments.

An embodiment of the present application further provides a computer-readable storage medium, which is configured to store a computer program which, when executed by a processor, implements the method according to any one of the preceding embodiments.

### BRIEF DESCRIPTION OF DRAWINGS

FIG. 1 is a schematic diagram of four-color frequency multiplexing according to an embodiment.
FIG. 2 is a schematic diagram of beams with different elevation angles and residual Doppler frequency offsets according to an embodiment.
FIG. 3 is a schematic diagram of multi-beam coverage of a satellite base station according to an embodiment.
FIG. 4 is a flowchart of an information indication method according to an embodiment.
FIG. 5 is a flowchart of another information indication method according to an embodiment.
FIG. 6 is a flowchart of another information indication method according to an embodiment.
FIG. 7 is a schematic diagram of a beam switching process of a second communication node according to an embodiment.
FIG. 8 is a flowchart of another information indication method according to an embodiment.
FIG. 9 is a schematic diagram of beam switching of a UE according to an embodiment.
FIG. 10 is a schematic diagram of another beam switching of a UE according to an embodiment.
FIG. 11 is a structural diagram of an information indication apparatus according to an embodiment.
FIG. 12 is a structural diagram of another information indication apparatus according to an embodiment.
FIG. 13 is a structural diagram of another information indication apparatus according to an embodiment.
FIG. 14 is a structural diagram of another information indication apparatus according to an embodiment.
FIG. 15 is a structural diagram of a UE according to an embodiment.
FIG. 16 is a structural diagram of a satellite base station according to an embodiment.

### DETAILED DESCRIPTION

Embodiments of the present application are described hereinafter in detail in conjunction with drawings.

In an LEO satellite communication system, a multi-beam coverage scheme is generally adopted, and different beams employ frequency multiplexing, which is a common technical method for acquiring high throughput. Since an LEO satellite base station moves at a high speed, multiple beams under one satellite base station will sweep across the ground with the trajectory of the satellite so that a terminal device frequently undergoes the switching of serving beams. During beam switching of the terminal device, there may be at least two problems described below.

Problem one: Since the coverage region of a satellite base station is much larger than the coverage region of a common ground base station, relatively many terminal devices are in the coverage region of the satellite base station. If the terminal devices need to be notified by the satellite base stations one by one during beam switching, a large signaling overhead will be generated.

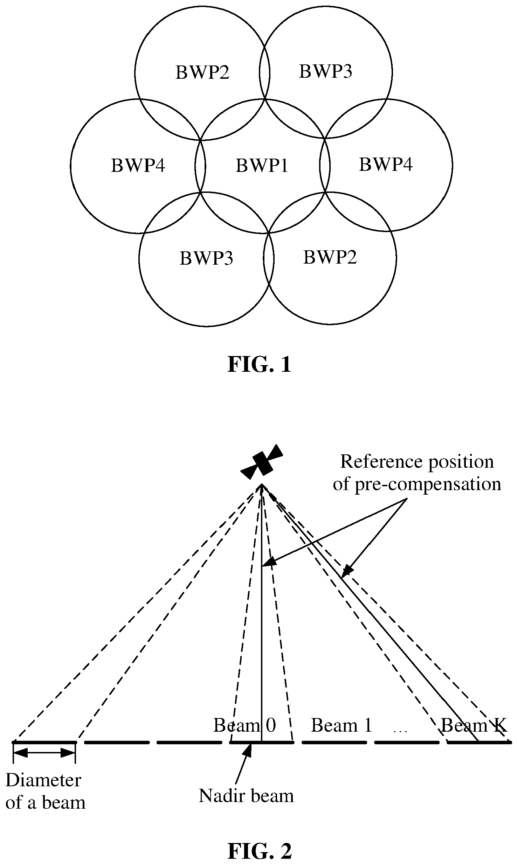

In the specifications of New Radio Access Technology (NR), the concept of a beam is embodied by a series of signals, for example, a downlink synchronization signal block (SSB) and a channel state information reference signal (CSI-RS). There is a one-to-one or many-to-one correspondence relationship between beams and identifiers (IDs) of physical cells. In the case where a physical cell includes multiple beams, the terminal device switches a serving beam at a lower signaling cost than a serving cell. Considering that different beams generally employ frequency multiplexing in a high-throughput satellite communication system, the serving beam is switched synchronously with a frequency in a typical scenario. To support simultaneous switching of the serving beam and the frequency, the definition of a bandwidth part (BWP) in an NR system can be used for binding beams to frequency bands. FIG. 1 is a schematic diagram of four-color frequency multiplexing according to an embodiment. As shown in FIG. 1, BWP1, BWP2, BWP3 and BWP4 correspond to different beams, respectively so that the frequency-division multiplexing of different beams can be implemented. In this case, it is worth studying how to enable the terminal device to switch the serving beam at a minimum signaling cost.

Problem two: Since the satellite base station moves at a high speed, a fixed terminal device on the ground is much likely to experience a very large Doppler frequency offset at a given time point, where the value of the Doppler frequency offset is specifically calculated depending on a relative speed of the satellite base station and the terminal device at the given time point. The Doppler frequency offset may cause some difficulties in establishing a communication link between the terminal device and the satellite base station. For example, the terminal device needs to perform a frequency sweeping operation within a wide range in a downlink synchronization process to find a position of a synchronization signal. To reduce an effect of the Doppler frequency offset on the reception of a downlink signal, one solution is to perform for each beam the pre-compensation of a Doppler frequency offset with respect to a central point of the coverage region of the each beam (it is to be noted that a reference position of pre-compensation may also be other points within the coverage area of a given beam). In this manner, the downlink signal received by the terminal device at the central point of the coverage region of the beam contains a Doppler frequency offset of 0, and the downlink signal received by the terminal device at another point in the coverage region of the beam contains a significantly reduced residual Doppler frequency offset, thereby reducing the complexity of an establishment process of the communication link between the satellite base station and the terminal device. FIG. 2 is a schematic diagram of beams with different elevation angles and residual Doppler frequency offsets according to an embodiment. As shown in FIG. 2, a maximum residual Doppler frequency offset contained in the downlink signal received by the terminal device may appear at the edge of a nadir beam, and the beams with different elevation angles use different frequency offset pre-compensation values. However, when the terminal device switches the serving beam, frequency hopping occurs before and after the serving beam is switched due to different frequency offset pre-compensation values. If the terminal device is unaware of a frequency offset pre-compensation value of a target serving beam, the link between the satellite base station and the terminal device might fail after the serving beam is switched.

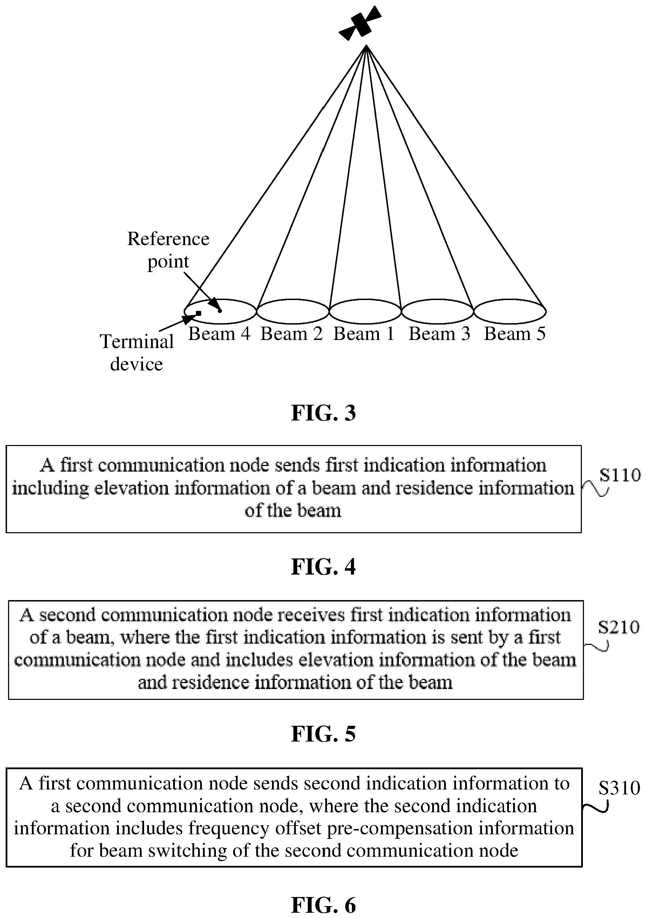

In the current discussion of a study item (SI) on Non-Terrestrial Networks (NTNs) of the 3rd Generation Partnership Project (3GPP), a commonly accepted solution that can solve this problem is that the satellite base station covers the ground using multiple narrow beams. As shown in FIG. 3, FIG. 3 is a schematic diagram of multi-beam coverage of a satellite base station according to an embodiment.

The Doppler frequency offset is an attribute associated with a physical position of the terminal device. Terminal devices at close positions have similar Doppler frequency offsets. When the ground is covered using narrow beams, each beam has a relatively small coverage area, and terminal devices within a coverage range of the same beam, such as terminal devices in Beam4 in FIG. 3, have similar Doppler frequency offsets. In this case, a certain point within a beam is selected as a reference point (for example, a center point of the coverage region of the beam) and the Doppler frequency offset at the reference point is calculated. When the satellite base station sends data using the beam, the pre-compensation of the Doppler frequency offset at the reference point is performed so that a signal received by the terminal device within the coverage range of the beam contains a greatly reduced residual Doppler frequency offset. Therefore, the process of establishing the link between the satellite base station and the terminal device is greatly simplified. This method solves the difficulty in establishing the link between the terminal device and the satellite base station and introduces another problem: since different beams have different frequency offset pre-compensation values, if the terminal device is unaware of the frequency offset pre-compensation value of the target serving beam, the downlink of the terminal device might fail due to a frequency synchronization failure after the serving beam is switched. More seriously, the terminal device might need to re-initiate a random access process, resulting in a significant decrease in communication efficiency.

The embodiments of the present application provide a mobile communication network (which includes, but is not limited to, a 5th-generation (5G) mobile communication network). The network architecture of the mobile communication network may include network side devices (such as one or more types of satellite base station) and terminal devices (such as a user equipment (UE), a user equipment data card, a relay and a mobile device). The embodiments of the present application provide an information indication method and apparatus and a computer-readable storage medium executable on the preceding network architecture, which can improve communication efficiency of an LEO satellite communication network.

In an embodiment, to solve the preceding problem one, FIG. 4 is a flowchart of an information indication method according to an embodiment. As shown in FIG. 4, the method provided in this embodiment is applicable to a first communication node which may be a network side device (such as a satellite base station) and the method includes the following.

In S110, the first communication node sends first indication information including elevation information of a beam and residence information of the beam.

Referring to FIG. 2, the coverage of the satellite base station is composed of multiple beams, each of which has a different maximum elevation value and a different minimum elevation value. An elevation angle of a fixed point on the ground relative to the satellite base station at a given time point may be calculated according to a coordinate of the fixed point and a coordinate of the satellite base station. A terminal device aware of its own coordinate and the coordinate of the satellite base station (for example, the coordinate of the satellite is broadcast) may calculate current elevation information in real time and determine whether to trigger beam switching based on the elevation information. Therefore, the first communication node may send the first indication information including the elevation information of the beam and the residence information of the beam. The first indication information may be broadcast information of the beam.

In an embodiment, the elevation information of the beam includes a maximum elevation value and a minimum elevation value of the beam; or a maximum elevation value and a difference value between the maximum elevation value and a minimum elevation value of the beam; or a minimum elevation value and a difference value between a maximum elevation value and the minimum elevation value of the beam.

If the elevation information of the beam includes the maximum elevation value and the difference value between the maximum elevation value of the beam and the minimum elevation value of the beam, a second communication node may calculate the minimum elevation value of the beam according to the maximum elevation value and the difference value between the maximum elevation value of the beam and the minimum elevation value of the beam.

If the elevation information of the beam includes the minimum elevation value and the difference value between the maximum elevation value of the beam and the minimum elevation value of the beam, the second communication node may calculate the maximum elevation value of the beam according to the minimum elevation value of the beam and the difference value between the maximum elevation value and the minimum elevation value of the beam.

In an embodiment, the residence information of the beam includes a maximum residence time threshold of the beam. The maximum residence time threshold of the beam may be a diameter of the beam (which is a major axis if the beam is an ellipse) divided by a linear speed of the satellite base station.

In an embodiment, the first indication information further includes coordinate information of the first communication node.

In an embodiment, the first indication information is carried in at least one of master information block (MIB) signaling or system information block (SIB) signaling.

FIG. 5 is a flowchart of another information indication method according to an embodiment. As shown in FIG. 5, the method provided in this embodiment is applicable to a second communication node which may be a terminal device (such as a UE) and the method includes the following.

In S210, the second communication node receives first indication information of a beam, where the first indication information is sent by a first communication node and includes elevation information of the beam and residence information of the beam.

Referring to FIG. 2, the coverage of a satellite base station is composed of multiple beams, each of which has a different maximum elevation value and a different minimum elevation value. An elevation angle of a fixed point on the ground relative to the satellite base station at a given time point may be calculated according to a coordinate of the fixed point and a coordinate of the satellite base station. The terminal device aware of its own coordinate and the coordinate of the satellite base station (for example, the coordinate of the satellite is broadcast) may calculate current elevation information in real time and determine whether to trigger beam switching based on the elevation information. Therefore, the first communication node may send the first indication information including the elevation information of the beam and the residence information of the beam. The first indication information may be broadcast information of the beam.

In an embodiment, the elevation information of the beam includes a maximum elevation value of the beam and a minimum elevation value of the beam; or a maximum elevation value and a difference value between the maximum elevation value of the beam and a minimum elevation value of the beam; or a minimum elevation value of the beam and a difference value between a maximum elevation value of the beam and the minimum elevation value of the beam.

If the elevation information of the beam includes the maximum elevation value of the beam and the difference value between the maximum elevation value of the beam and the minimum elevation value of the beam, a second communication node may calculate the minimum elevation value of the beam according to the maximum elevation value of the beam and the difference value between the maximum elevation value of the beam and the minimum elevation value of the beam.

If the elevation information of the beam includes the minimum elevation value of the beam and the difference value between the maximum elevation value of the beam and the minimum elevation value of the beam, the second communication node may calculate the maximum elevation value of the beam according to the minimum elevation value of the beam and the difference value between the maximum elevation value of the beam and the minimum elevation value of the beam.

In an embodiment, the residence information of the beam includes a maximum residence time threshold of the beam. The maximum residence time threshold of the beam may be a diameter of the beam (which is a major axis if the beam is an ellipse) divided by a linear speed of the satellite base station.

In an embodiment, the first indication information further includes coordinate information of the first communication node.

In an embodiment, the first indication information is carried in at least one of MIB signaling or SIB signaling.

Some example embodiments are listed below for describing the information indication methods in FIGS. 4 and 5. The following example embodiment is described using an example in which the first communication node is the satellite base station and the second communication node is the UE.

In a first example embodiment, when the UE accesses a current beam (which may also be referred to as a currently accessed beam or a current serving beam) for the first time, if the UE has no ephemeris information of the satellite base station stored therein, the UE monitors a current satellite coordinate broadcast by the satellite base station, calculates a current elevation angle and records the current elevation angle as an initial entry elevation angle, and starts a maximum residence time timer; if the UE has the ephemeris information of the satellite base station stored therein, the UE directly reads the current satellite coordinate, calculates the current elevation angle and records the current elevation angle as the initial entry elevation angle, and starts the maximum residence time timer.

Then, the UE monitors broadcast information of the satellite base station and receives elevation information and residence information of the current beam, which are broadcast by the satellite base station.

Before the maximum residence time timer ends, the UE monitors the current satellite coordinate periodically broadcast by the satellite base station to calculate the current elevation angle and compare the current elevation angle with a range of elevation values of the current beam. If the current elevation angle is out of the range of elevation values of the current beam, the UE actively scans a downlink SSB and triggers beam switching according to a correspondence relationship between SSBs and beams. If the beam switching succeeds, the maximum residence time timer is restarted. If the UE does not trigger the beam switching during the operation of the maximum residence time timer, when the maximum residence time timer ends, a user actively scans the downlink SSB and triggers the beam switching according to the correspondence relationship between SSBs and beams.

In this manner, the UE can autonomously determine whether the beam switching is required based on the elevation angle and the range of elevation values of the beam so that the beam switching is autonomously triggered by the UE instead of being triggered by the satellite base station and the signaling overhead for the satellite base station to notify the UE to perform switching is saved, thereby improving communication efficiency of an LEO satellite communication network.

To solve the preceding problem two, FIG. 6 is a flowchart of another information indication method according to an embodiment. As shown in FIG. 6, the method provided in this embodiment is applicable to a first communication node which may be a network side device (such as a satellite base station) and the method includes the following.

In S310, the first communication node sends second indication information to a second communication node, where the second indication information includes frequency offset pre-compensation information for beam switching of the second communication node.

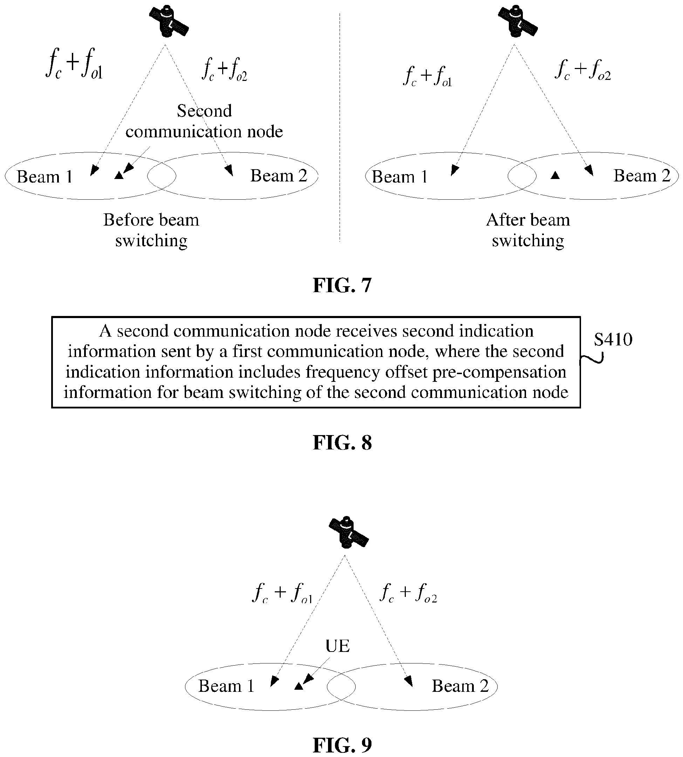

FIG. 7 is a schematic diagram of a beam switching process of a second communication node according to an embodiment. As shown in FIG. 7, a carrier frequency of the first communication node is *ƒ_{C}*, a currently accessed beam (also referred to as a serving beam) of the second communication node before the beam switching is a beam 1, and a frequency offset pre-compensation value of the beam 1 is *ƒ*_{*o*1}; a currently accessed beam (also referred to as a serving beam) of the second communication node after the beam switching is a beam 2, and a frequency offset pre-compensation value of the beam 2 is *ƒ*_{*o*2}; generally, *ƒ*_{*o*1} *≠ ƒ*_{*o*2}.

In an embodiment, the frequency offset pre-compensation information includes a difference value between a frequency offset pre-compensation value of a first beam and a frequency offset pre-compensation value of a second beam, where the first beam is a beam currently accessed by the second communication node, and the second beam is a beam to be switched to by the second communication node.

Referring to FIG. 7, the first beam is the beam 1 in FIG. 7, the second beam is the beam 2 in FIG. 7, and the difference value between the frequency offset pre-compensation value of the first beam and the frequency offset pre-compensation value of the second beam may be *ƒ*_{*o*1} *- ƒ*_{*o*2} or *ƒ*_{*o*2} *- ƒ*_{*o*1}

The difference value between the frequency offset pre-compensation value of the first beam and the frequency offset pre-compensation value of the second beam is carried in at least one of radio resource control (RRC) signaling, media access control (MAC) signaling or downlink control information (DCI) signaling.

In an embodiment, the frequency offset pre-compensation information includes the frequency offset pre-compensation value of the first beam and the frequency offset pre-compensation value of the second beam, where the first beam is the beam currently accessed by the second communication node, and the second beam is the beam to be switched to by the second communication node.

Referring to FIG. 7, the first beam is the beam 1 in FIG. 7, the second beam is the beam 2 in FIG. 7, the frequency offset pre-compensation value of the first beam is *ƒ*_{*o*1}, the frequency offset pre-compensation value of the second beam is *ƒ*_{*o*2}, and generally *ƒ*_{*o*1} ≠ *ƒ*_{*o*2}.

The frequency offset pre-compensation value of the first beam is carried in at least one of MIB signaling, SIB signaling, the RRC signaling, the MAC signaling or the DCI signaling; and the frequency offset pre-compensation value of the second beam is carried in at least one of the RRC signaling, the MAC signaling or the DCI signaling.

In an embodiment, the frequency offset pre-compensation information includes identification information and frequency offset pre-compensation values of at least two beams and first identification information, where the at least two beams include the beam currently accessed by the second communication node and the beam to be switched to by the second communication node, and the first identification information is identification information of the beam to be switched to by the second communication node.

Referring to FIG. 7, the beam currently accessed by the second communication node is the beam 1 in FIG. 7, the beam to be switched to by the second communication node is the beam 2 in FIG. 7, the at least two beams include at least the beam 1 and the beam 2, and the first identification information is identification information of the beam 2.

The identification information of the beam refers to information that can be used for uniquely determining a certain beam, and the identification information may be, but is not limited to, a number of the beam.

The identification information and the frequency offset pre-compensation values of the at least two beams are carried in at least one of the MIB signaling, the SIB signaling, the RRC signaling, the MAC signaling or the DCI signaling; and the first identification information is carried in at least one of the RRC signaling, the MAC signaling or the DCI signaling.

In an embodiment, the frequency offset pre-compensation information includes identification information and a frequency offset pre-compensation value of a reference beam, identification information of non-reference beams, difference values between the frequency offset pre-compensation value of the reference beam and frequency offset pre-compensation values of the non-reference beams and the first identification information, where the first identification information is the identification information of the beam to be switched to by the second communication node.

Referring to FIG. 7, assuming that the reference beam is the beam 1 in FIG. 7 and the beam to be switched to by the second communication node is the beam 2 in FIG. 7, the frequency offset pre-compensation information includes identification information and the frequency offset pre-compensation value *ƒ*_{*o*1} of the beam 1, identification information of multiple beams except the beam 1 and difference values between *ƒ*_{*o*1} and frequency offset pre-compensation values of these beams, and the first identification information is the identification information of the beam 2.

The identification information of the beam refers to information that can be used for uniquely determining a certain beam, and the identification information may be, but is not limited to, the number of the beam.

The identification information and the frequency offset pre-compensation value of the reference beam, the identification information of the non-reference beams and the difference values between the frequency offset pre-compensation value of the reference beam and the frequency offset pre-compensation values of the non-reference beams are carried in at least one of the MIB signaling, the SIB signaling, the RRC signaling, the MAC signaling or the DCI signaling; and the first identification information is carried in at least one of the RRC signaling, the MAC signaling or the DCI signaling.

FIG. 8 is a flowchart of another information indication method according to an embodiment. As shown in FIG. 8, the method provided in this embodiment is applicable to a second communication node which may be a terminal device (such as a UE) and the method includes the following.

In S410, the second communication node receives second indication information sent by a first communication node, where the second indication information includes frequency offset pre-compensation information for beam switching of the second communication node.

In an embodiment, the frequency offset pre-compensation information includes a difference value between a frequency offset pre-compensation value of a first beam and a frequency offset pre-compensation value of a second beam, where the first beam is a beam currently accessed by the second communication node, and the second beam is a beam to be switched to by the second communication node.

Referring to FIG. 7, the first beam is a beam 1 in FIG. 7, the second beam is a beam 2 in FIG. 7, and the difference value between the frequency offset pre-compensation value of the first beam and the frequency offset pre-compensation value of the second beam may be *ƒ*_{*o*1} - *ƒ*_{*o*2} or *ƒ*_{*o*2} *- ƒ*_{*o*1}.

The difference value between the frequency offset pre-compensation value of the first beam and the frequency offset pre-compensation value of the second beam is carried in at least one of RRC signaling, MAC signaling or DCI signaling.

In an embodiment, the frequency offset pre-compensation information includes the frequency offset pre-compensation value of the first beam and the frequency offset pre-compensation value of the second beam, where the first beam is the beam currently accessed by the second communication node, and the second beam is the beam to be switched to by the second communication node.

Referring to FIG. 7, the first beam is the beam 1 in FIG. 7, the second beam is the beam 2 in FIG. 7, the frequency offset pre-compensation value of the first beam is *ƒ*_{*o*1}, the frequency offset pre-compensation value of the second beam is *ƒ*_{*o*2}, and generally *ƒ*_{*o*1} ≠ *ƒ*_{*o*2}.

The frequency offset pre-compensation value of the first beam is carried in at least one of MIB signaling, SIB signaling, the RRC signaling, the MAC signaling or the DCI signaling; and the frequency offset pre-compensation value of the second beam is carried in at least one of the RRC signaling, the MAC signaling or the DCI signaling.

In an embodiment, the frequency offset pre-compensation information includes identification information and frequency offset pre-compensation values of at least two beams and first identification information, where the at least two beams include the beam currently accessed by the second communication node and the beam to be switched to by the second communication node, and the first identification information is identification information of the beam to be switched to by the second communication node.

Referring to FIG. 7, the beam currently accessed by the second communication node is the beam 1 in FIG. 7, the beam to be switched to by the second communication node is the beam 2 in FIG. 7, the at least two beams include at least the beam 1 and the beam 2, and the first identification information is identification information of the beam 2.

The identification information of the beam refers to information that can be used for uniquely determining a certain beam, and the identification information may be, but is not limited to, a number of the beam.

The identification information and the frequency offset pre-compensation values of the at least two beams are carried in at least one of the MIB signaling, the SIB signaling, the RRC signaling, the MAC signaling or the DCI signaling; and the first identification information is carried in at least one of the RRC signaling, the MAC signaling or the DCI signaling.

In an embodiment, the frequency offset pre-compensation information includes identification information and a frequency offset pre-compensation value of a reference beam, identification information of non-reference beams, difference values between the frequency offset pre-compensation value of the reference beam and frequency offset pre-compensation values of the non-reference beams and the first identification information, where the first identification information is the identification information of the beam to be switched to by the second communication node.

Referring to FIG. 7, assuming that the reference beam is the beam 1 in FIG. 7 and the beam to be switched to by the second communication node is the beam 2 in FIG. 7, the frequency offset pre-compensation information includes identification information and the frequency offset pre-compensation value *ƒ*_{*o*1} of the beam 1, identification information of multiple beams except the beam 1 and difference values between *ƒ*_{*o*1} and frequency offset pre-compensation values of these beams, and the first identification information is the identification information of the beam 2.

The identification information of the beam refers to information that can be used for uniquely determining a certain beam, and the identification information may be, but is not limited to, the number of the beam.

The identification information and the frequency offset pre-compensation value of the reference beam, the identification information of the non-reference beams and the difference values between the frequency offset pre-compensation value of the reference beam and the frequency offset pre-compensation values of the non-reference beams are carried in at least one of the MIB signaling, the SIB signaling, the RRC signaling, the MAC signaling or the DCI signaling; and the first identification information is carried in at least one of the RRC signaling, the MAC signaling or the DCI signaling.

Some example embodiments are listed below for describing the information indication methods in FIGS. 6 and 7. The following example embodiment is described using an example in which the first communication node is the satellite base station and the second communication node is the UE.

In a first example embodiment, FIG. 9 is a schematic diagram of beam switching of a UE according to an embodiment. As shown in FIG. 9, a carrier frequency of the satellite base station is *ƒ_{C}*, a beam currently accessed by the UE is a beam 1, and a frequency offset pre-compensation value of the beam 1 is *ƒ*_{*o*1}; a beam to be switched to by the UE is a beam 2, and a frequency offset pre-compensation value of the beam 2 is *ƒ*_{*o*2}; generally, *ƒ*_{*o*1} *≠ ƒ*_{*o*2}.

Assuming that the UE stays in the beam 1 for a sufficiently long time, uplink and downlink frequencies of the UE and the beam 1 are synchronized by an open-loop or closed-loop frequency adjustment mechanism. At this time, a downlink receive frequency of the UE is *ƒᵣₓ*.

When the UE is in an overlapping region of the beam 1 and the beam 2, the satellite base station notifies the UE through the beam 1 of a difference value between the frequency offset pre-compensation value of the beam 2 and the frequency offset pre-compensation value of the beam 1 in the form of RRC/MAC/DCI signaling, where the difference value is defined as *δ* = *ƒ*_{*o*2} *- ƒ*_{*o*1}*.*

When the UE performs the beam switching, the receive frequency of the UE is adjusted to *ƒᵣₓ* + *δ* so as to synchronize downlink frequencies of the UE and the beam 2.

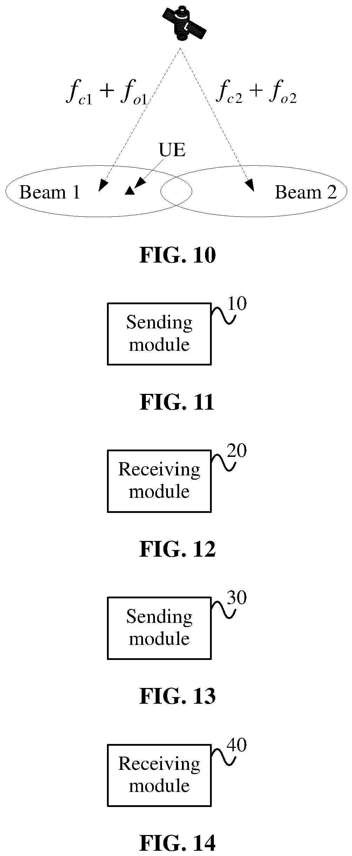

In a second example embodiment, FIG. 10 is a schematic diagram of another beam switching of a UE according to an embodiment. As shown in FIG. 10, a beam 1 and a beam 2 of the satellite base station use different carrier frequencies, a carrier frequency of the beam 1 is *ƒ*_{*c*1,} and a carrier frequency of the beam 2 is *ƒ*_{*c*2}. A beam currently accessed by the UE is the beam 1, and a frequency offset pre-compensation value of the beam 1 is *ƒ*_{*o*1}; a beam to be switched to by the UE is the beam 2, and a frequency offset pre-compensation value of the beam 2 is *ƒ*_{*o*2}; generally, *ƒ*_{*o*1} *≠ ƒ*_{*o*2}.

Assuming that the UE stays in the beam 1 for a sufficiently long time, uplink and downlink frequencies of the UE and the beam 1 are synchronized by an open-loop or closed-loop frequency adjustment mechanism. At this time, a downlink receive frequency of the UE is *ƒᵣₓ*.

When the UE is in an overlapping region of the beam 1 and the beam 2, the satellite base station notifies the UE through the beam 1 of a difference value between the frequency offset pre-compensation value of the beam 2 and the frequency offset pre-compensation value of the beam 1 in the form of RRC/MAC/DCI signaling, where the difference value is defined as *δ* = *ƒ*_{*o*2} *- ƒ*_{*o*1}.

When the UE performs the beam switching, the receive frequency of the UE is adjusted to *ƒᵣₓ* + (*ƒ*_{*c*2} - *ƒ*_{*c*1}) + *δ* so as to synchronize downlink frequencies of the UE and the beam 2.

In a third example embodiment, referring to FIG. 9, assuming that the UE is in the coverage region of a beam 1 when the UE is powered on, the UE performs downlink synchronization and a random access process on the beam 1.

A frequency offset pre-compensation value *ƒ*_{*o*1} of the beam 1 is included in MIB or SIB information of the beam 1. When the UE completes the detection of downlink MIB or SIB information in a downlink synchronization stage, the frequency offset pre-compensation value *ƒ*_{*o*1} of the beam 1 is obtained.

Assuming that the UE stays in the beam 1 for a sufficiently long time, uplink and downlink frequencies of the UE and the beam 1 are synchronized by an open-loop or closed-loop frequency adjustment mechanism. At this time, a downlink receive frequency of the UE is *ƒᵣₓ*.

When the UE is in an overlapping region of the beam 1 and a beam 2, the satellite base station notifies the UE through the beam 1 of a frequency offset pre-compensation value *ƒ*_{*o*2} of the beam 2 in the form of RRC/MAC/DCI signaling.

When the UE performs beam switching, the receive frequency of the UE is adjusted to *ƒᵣₓ* + (*ƒ*_{*o*2} - *ƒ*_{*o*1}) so as to synchronize downlink frequencies of the UE and the beam 2.

In a fourth example embodiment, referring to FIG. 9, assuming that the UE is in the coverage region of a beam 1 when the UE is powered on, the UE performs downlink synchronization and a random access process on the beam 1.

Assuming that the UE stays in the beam 1 for a sufficiently long time, uplink and downlink frequencies of the UE and the beam 1 are synchronized by an open-loop or closed-loop frequency adjustment mechanism. At this time, a downlink receive frequency of the UE is *ƒᵣₓ*.

Numbers of beams are used as identifiers of the beams, and frequency offset pre-compensation values corresponding to beams 1 to n are *ƒ*_{*o*1} to *ƒₒₙ,* respectively. The numbers of the beams and the frequency offset pre-compensation values corresponding to the beams are sent, as configuration information of the satellite base station, to the UE in the beam via RRC signaling in a broadcast or unicast form. The UE detects the RRC signaling to obtain the frequency offset pre-compensation value corresponding to each beam.

When the UE is in an overlapping region of the beam 1 and a beam 2, the satellite base station notifies the UE through the beam 1 in the form of RRC/MAC/DCI signaling that the beam 2 is to serve the UE.

The UE queries the configuration information of the satellite base station to obtain that a frequency offset pre-compensation value of the beam 1 (a current serving beam) is *ƒ*_{*o*1} and a frequency offset pre-compensation value of the beam 2 (a beam to be switched to) is *ƒ*_{*o*2}.

When the UE performs beam switching, the receive frequency of the UE is adjusted to *ƒᵣₓ* + (*ƒ*_{*o*2} *- ƒ*_{*o*1}) so as to synchronize downlink frequencies of the UE and the beam 2.

In a fifth example embodiment, referring to FIG. 9, assuming that the UE is in the coverage region of a beam k when the UE is powered on, the UE performs downlink synchronization and a random access process on the beam k.

Assuming that the UE stays in the beam k for a sufficiently long time, uplink and downlink frequencies of the UE and the beam k are synchronized by an open-loop or closed-loop frequency adjustment mechanism. At this time, a downlink receive frequency of the UE is *ƒᵣₓ*.

Numbers of beams are used as identifiers of the beams. There are a total of n beams under the satellite base station, and frequency offset pre-compensation values corresponding to beams 1 to n are *ƒ*_{*o*1} to *ƒₒₙ*, respectively. A beam 1 is used as a reference beam, and difference values between frequency offset pre-compensation values of the other beams and a frequency offset pre-compensation value of the reference beam are Δ₂, Δ₃,...Δ*ₙ*. The frequency offset pre-compensation value *ƒ*_{*o*1} of the reference beam, the numbers of the beams and frequency offset pre-compensation difference values Δ₂, Δ₃,...Δ*ₙ*, are sent, as configuration information of the satellite base station, to all UEs under the satellite via RRC signaling in a broadcast form.

When the UE is in an overlapping region of a beam i and a beam j, the satellite base station notifies the UE through the beam i in the form of RRC/MAC/DCI signaling that the beam j is to serve the UE.

The UE queries the configuration information of the satellite base station to obtain that the reference beam is the beam 1, the frequency offset pre-compensation value of the reference beam is *ƒ*_{*o*1}, a difference value between a frequency offset pre-compensation value of the beam i (a current serving beam) and the frequency offset pre-compensation value of the reference beam is Δ*ᵢ,* and a difference value between a frequency offset pre-compensation value of the beam j (a beam to be switched to) and the frequency offset pre-compensation value of the reference beam is Δ*ⱼ*.

When the UE performs beam switching, the receive frequency of the UE is adjusted to *ƒᵣₓ* - Δ*ᵢ* + Δ*ⱼ* so as to synchronize downlink frequencies of the UE and the beam j.

In this manner, the UE can automatically adjust a frequency at which a signal is received and quickly implement frequency synchronization of the UE and the beam to be switched to, avoiding a link failure and other problems and improving communication efficiency of an LEO satellite communication network.

FIG. 11 is a structural diagram of an information indication apparatus according to an embodiment. The information indication apparatus may be disposed in a first communication node. As shown in FIG. 11, the apparatus includes a sending module 10.

The sending module 10 is configured to send first indication information including elevation information of a beam and residence information of the beam.

The information indication apparatus provided in this embodiment may implement the information indication method in the preceding embodiments. The information indication apparatus provided in this embodiment has similar implementation principles and technical effects, which are not repeated here.

In an embodiment, the elevation information of the beam includes a maximum elevation value of the beam and a minimum elevation value of the beam; or a maximum elevation value of the beam and a difference value between the maximum elevation value of the beam and a minimum elevation value of the beam; or a minimum elevation value of the beam and a difference value between a maximum elevation value of the beam and the minimum elevation value of the beam.

In an embodiment, the residence information of the beam includes a maximum residence time threshold of the beam.

In an embodiment, the first indication information further includes coordinate information of the first communication node.

In an embodiment, the first indication information is carried in at least one of MIB signaling or SIB signaling.

FIG. 12 is a structural diagram of another information indication apparatus according to an embodiment. The information indication apparatus may be disposed in a second communication node. As shown in FIG. 12, the apparatus includes a receiving module 20.

The receiving module 20 is configured to receive first indication information of a beam, where the first indication information is sent by a first communication node and includes elevation information of the beam and residence information of the beam.

The information indication apparatus provided in this embodiment may implement the information indication method in the preceding embodiments. The information indication apparatus provided in this embodiment has similar implementation principles and technical effects, which are not repeated here.

In an embodiment, the elevation information of the beam includes a maximum elevation value of the beam and a minimum elevation value of the beam; or a maximum elevation value of the beam and a difference value between the maximum elevation value of the beam and a minimum elevation value of the beam; or a minimum elevation value of the beam and a difference value between a maximum elevation value of the beam and the minimum elevation value of the beam.

In an embodiment, the residence information of the beam includes a maximum residence time threshold of the beam.

In an embodiment, the first indication information further includes coordinate information of the first communication node.

In an embodiment, the first indication information is carried in at least one of MIB signaling or SIB signaling.

FIG. 13 is a structural diagram of another information indication apparatus according to an embodiment. The information indication apparatus may be disposed in a first communication node. As shown in FIG. 13, the apparatus includes a sending module 30.

The sending module 30 is configured to send second indication information to a second communication node, where the second indication information includes frequency offset pre-compensation information for beam switching of the second communication node.

The information indication apparatus provided in this embodiment may implement the information indication method in the preceding embodiments. The information indication apparatus provided in this embodiment has similar implementation principles and technical effects, which are not repeated here.

In an embodiment, the frequency offset pre-compensation information includes a difference value between a frequency offset pre-compensation value of a first beam and a frequency offset pre-compensation value of a second beam, where the first beam is a beam currently accessed by the second communication node, and the second beam is a beam to be switched to by the second communication node.

In an embodiment, the difference value between the frequency offset pre-compensation value of the first beam and the frequency offset pre-compensation value of the second beam is carried in at least one of RRC signaling, MAC signaling or DCI signaling.

In an embodiment, the frequency offset pre-compensation information includes the frequency offset pre-compensation value of the first beam and the frequency offset pre-compensation value of the second beam, where the first beam is the beam currently accessed by the second communication node, and the second beam is the beam to be switched to by the second communication node.

In an embodiment, the frequency offset pre-compensation value of the first beam is carried in at least one of MIB signaling, SIB signaling, the RRC signaling, the MAC signaling or the DCI signaling.

The frequency offset pre-compensation value of the second beam is carried in at least one of the RRC signaling, the MAC signaling or the DCI signaling.

In an embodiment, the frequency offset pre-compensation information includes identification information and frequency offset pre-compensation values of at least two beams and first identification information, where the at least two beams include the beam currently accessed by the second communication node and the beam to be switched to by the second communication node, and the first identification information is identification information of the beam to be switched to by the second communication node.

In an embodiment, the identification information is a number of a beam.

In an embodiment, the identification information and the frequency offset pre-compensation values of the at least two beams are carried in at least one of the MIB signaling, the SIB signaling, the RRC signaling, the MAC signaling or the DCI signaling.

The first identification information is carried in at least one of the RRC signaling, the MAC signaling or the DCI signaling.

In an embodiment, the frequency offset pre-compensation information includes identification information and a frequency offset pre-compensation value of a reference beam, identification information of non-reference beams, difference values between the frequency offset pre-compensation value of the reference beam and frequency offset pre-compensation values of the non-reference beams and the first identification information, where the first identification information is the identification information of the beam to be switched to by the second communication node.

In an embodiment, the identification information is the number of the beam.

In an embodiment, the identification information and the frequency offset pre-compensation value of the reference beam, the identification information of the non-reference beams and the difference values between the frequency offset pre-compensation value of the reference beam and the frequency offset pre-compensation values of the non-reference beams are carried in at least one of the MIB signaling, the SIB signaling, the RRC signaling, the MAC signaling or the DCI signaling.

The first identification information is carried in at least one of the RRC signaling, the MAC signaling or the DCI signaling.

FIG. 14 is a structural diagram of another information indication apparatus according to an embodiment. The information indication apparatus may be disposed in a second communication node. As shown in FIG. 14, the apparatus includes a receiving module 40.

The receiving module 40 is configured to receive second indication information sent by a first communication node, where the second indication information includes frequency offset pre-compensation information for beam switching of the second communication node.

The information indication apparatus provided in this embodiment may implement the information indication method in the preceding embodiments. The information indication apparatus provided in this embodiment has similar implementation principles and technical effects, which are not repeated here.

In an embodiment, the frequency offset pre-compensation information includes a difference value between a frequency offset pre-compensation value of a first beam and a frequency offset pre-compensation value of a second beam, where the first beam is a beam currently accessed by the second communication node, and the second beam is a beam to be switched to by the second communication node.

In an embodiment, the difference value between the frequency offset pre-compensation value of the first beam and the frequency offset pre-compensation value of the second beam is carried in at least one of RRC signaling, MAC signaling or DCI signaling.

In an embodiment, the frequency offset pre-compensation information includes the frequency offset pre-compensation value of the first beam and the frequency offset pre-compensation value of the second beam, where the first beam is the beam currently accessed by the second communication node, and the second beam is the beam to be switched to by the second communication node.

In an embodiment, the frequency offset pre-compensation value of the first beam is carried in at least one of MIB signaling, SIB signaling, the RRC signaling, the MAC signaling or the DCI signaling.

The frequency offset pre-compensation value of the second beam is carried in at least one of the RRC signaling, the MAC signaling or the DCI signaling.

In an embodiment, the frequency offset pre-compensation information includes identification information and frequency offset pre-compensation values of at least two beams and first identification information, where the at least two beams include the beam currently accessed by the second communication node and the beam to be switched to by the second communication node, and the first identification information is identification information of the beam to be switched to by the second communication node.

In an embodiment, the identification information is a number of a beam.

In an embodiment, the identification information and the frequency offset pre-compensation values of the at least two beams are carried in at least one of the MIB signaling, the SIB signaling, the RRC signaling, the MAC signaling or the DCI signaling.

The first identification information is carried in at least one of the RRC signaling, the MAC signaling or the DCI signaling.

In an embodiment, the frequency offset pre-compensation information includes identification information and a frequency offset pre-compensation value of a reference beam, identification information of non-reference beams, difference values between the frequency offset pre-compensation value of the reference beam and frequency offset pre-compensation values of the non-reference beams and the first identification information, where the first identification information is the identification information of the beam to be switched to by the second communication node.

In an embodiment, the identification information is the number of the beam.

In an embodiment, the identification information and the frequency offset pre-compensation value of the reference beam, the identification information of the non-reference beams and the difference values between the frequency offset pre-compensation value of the reference beam and the frequency offset pre-compensation values of the non-reference beams are carried in at least one of the MIB signaling, the SIB signaling, the RRC signaling, the MAC signaling or the DCI signaling.

The first identification information is carried in at least one of the RRC signaling, the MAC signaling or the DCI signaling.

The embodiments of the present application further provide an information indication apparatus. The apparatus includes a processor configured to, when executing a computer program, implement the method according to any one of the embodiments of the present application. Specifically, the information indication apparatus may be a first communication node provided by any one of the embodiments of the present application or may be a second communication node provided by any one of the embodiments of the present application, which is not specifically limited in the present application.

For example, the following embodiments provide structural diagrams of a UE and a satellite base station as information indication apparatuses.

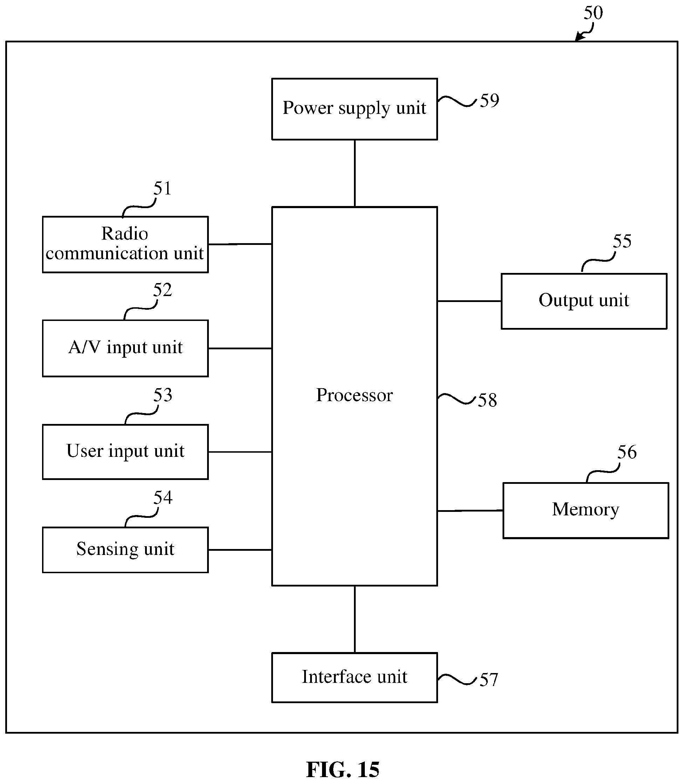

FIG. 15 is a structural diagram of a UE according to an embodiment. The UE may be implemented in multiple forms. The UE in the present application may include, but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal and a vehicle-mounted electronic rearview mirror and fixed terminal devices such as a digital television (TV) and a desktop computer.

As shown in FIG. 15, a UE 50 may include a radio communication unit 51, an audio/video (A/V) input unit 52, a user input unit 53, a sensing unit 54, an output unit 55, a memory 56, an interface unit 57, a processor 58 and a power supply unit 59. FIG. 15 illustrates the UE including multiple components; but it is to be understood that not all illustrated components are required to be implemented. More or fewer components may be implemented instead.

In this embodiment, the radio communication unit 51 allows radio communication between the UE 50 and a base station or a network. The A/V input unit 52 is configured to receive audio or video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration and the like and generates commands or signals for controlling the operations of the UE 50. The interface unit 57 serves as an interface through which at least one external apparatus can be connected to the UE 50. The output unit 55 is configured to provide output signals in a visual, audio and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of the present application.

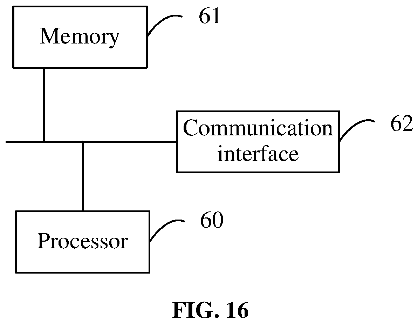

FIG. 16 is a structural diagram of a satellite base station according to an embodiment. As shown in FIG. 16, the satellite base station includes a processor 60, a memory 61 and a communication interface 62. One or more processors 60 may be provided in the satellite base station, and one processor 60 is shown as an example in FIG. 16. The processor 60, the memory 61 and the communication interface 62 in the satellite base station may be connected through a bus or in other manners. In FIG. 16, the connection through a bus is shown as an example. The bus represents one or more of several types of bus structures, including a memory bus or a memory controller, a peripheral bus, an Accelerated Graphics Port (AGP), a processor or a local bus using any bus structure among multiple bus structures.

As a computer-readable storage medium, the memory 61 may be configured to store software programs, computer-executable programs and modules, such as program instructions/modules corresponding to the method in the embodiments of the present application. The processor 60 executes software programs, instructions and modules stored in the memory 61 to perform at least one function application and data processing of the satellite base station, that is, to implement the information indication method described above.

The memory 61 may include a program storage region and a data storage region. The program storage region may store an operating system and an application program required by at least one function. The data storage region may store data created depending on the use of a terminal. Additionally, the memory 61 may include a high-speed random access memory and may further include a non-volatile memory, for example, at least one magnetic disk memory and flash memory or other non-volatile solid-state memories. In some examples, the memory 61 may include memories that are remotely disposed with respect to the processor 60. These remote memories may be connected to the satellite base station via a network. Examples of the preceding network include, but are not limited to, the Internet, an intranet, a network, a communication network and a combination thereof.

The communication interface 62 may be configured to receive and send data.

The embodiments of the present application further provide a computer-readable storage medium. The computer-readable storage medium is configured to store a computer program which, when executed by a processor, implements the method provided by any one of the embodiments of the present application.

A computer storage medium in the embodiments of the present application may use any combination of one or more computer-readable media. Computer-readable media may be computer-readable signal media or computer-readable storage media. For example, the computer-readable storage medium may be, but is not limited to, an electrical, magnetic, optical, electromagnetic, infrared or semiconductor system, apparatus or device or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory, a magnetic memory or any suitable combination thereof. In the present application, the computer-readable storage medium may be any tangible medium including or storing a program. The program may be used by or used in conjunction with an instruction execution system, apparatus or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal or any suitable combination thereof. The computer-readable signal medium may also be any computer-readable medium except the computer-readable storage medium. The computer-readable medium may send, propagate or transmit the program used by or used in conjunction with the instruction execution system, apparatus or device.

The program codes included on the computer-readable medium may be transmitted on any suitable medium including, but not limited to, a wireless medium, a wire, an optical cable, a radio frequency (RF) and the like or transmitted on any suitable combination thereof.

Computer program codes for performing operations of the present disclosure may be written in one or more programming languages or a combination of multiple programming languages. The programming languages include object-oriented programming languages such as Java, Smalltalk, C++, Ruby and Go and conventional procedural programming languages such as C language or similar programming languages. Program codes may be executed entirely on a user computer, partly on the user computer, as a standalone software package, partly on the user computer and partly on a remote computer, or entirely on the remote computer or a server. In the case where the remote computer is involved, the remote computer may be connected to the user computer via any type of network including a local area network (LAN) or a wide area network (WAN) or may be connected to an external computer (for example, via the Internet through an Internet service provider).

It is to be understood by those skilled in the art that the term "user terminal" covers any suitable type of radio UE, for example, a mobile phone, a portable data processing apparatus, a portable web browser or a vehicle-mounted mobile station.

In general, multiple embodiments of the present application may be implemented in hardware, a dedicated circuit, software, logics or any combination thereof. For example, some aspects may be implemented in hardware while other aspects may be implemented in firmware or software that can be executed by a controller, a microprocessor or other computing apparatuses though the present application is not limited thereto.

Embodiments of the present application may be implemented by computer program instructions executed by a data processor of a mobile apparatus, for example, in a processor entity, hardware or a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules and functions, or may represent a combination of program steps with logic circuits, modules and functions. Computer programs may be stored on a memory. The memory may be of any type suitable for a local technical environment and may be implemented using any suitable data storage technology, such as, but not limited to, a read-only memory (ROM), a random access memory (RAM) and an optical memory apparatus and system (a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on multi-core processor architecture.

## Claims

1. An information indication method, comprising:
sending, by a first communication node, first indication information, wherein the first indication information comprises elevation information of a beam and residence information of the beam.

2. The method of claim 1, wherein the elevation information of the beam comprises one of: a maximum elevation value of the beam and a minimum elevation value of the beam; a maximum elevation value of the beam and a difference value between the maximum elevation value of the beam, and a minimum elevation value of the beam; or, a minimum elevation value of the beam and a difference value between a maximum elevation value of the beam, and the minimum elevation value of the beam.

3. The method of claim 1, wherein the residence information of the beam comprises a maximum residence time threshold of the beam.

4. The method of claim 1, wherein the first indication information further comprises coordinate information of the first communication node.

5. The method of claim 1 or 4, wherein the first indication information is carried in at least one of master information block, MIB, signaling or system information block, SIB, signaling.

6. An information indication method, comprising:
receiving, by a second communication node, first indication information of a beam, wherein the first indication information is sent by a first communication node and comprises elevation information of the beam and residence information of the beam.

7. The method of claim 6, wherein the elevation information of the beam comprises one of: a maximum elevation value of the beam and a minimum elevation value of the beam; a maximum elevation value of the beam and a difference value between the maximum elevation value of the beam and a minimum elevation value of the beam; or a minimum elevation value of the beam and a difference value between a maximum elevation value of the beam and the minimum elevation value of the beam.

8. The method of claim 6, wherein the residence information of the beam comprises a maximum residence time threshold of the beam.

9. The method of claim 6, wherein the first indication information further comprises coordinate information of the first communication node.

10. The method of claim 6 or 9, wherein the first indication information is carried in at least one of master information block, MIB, signaling or system information block, SIB, signaling.

11. An information indication method, comprising:
sending, by a first communication node, second indication information to a second communication node, wherein the second indication information comprises frequency offset pre-compensation information for beam switching of the second communication node.

12. The method of claim 11, wherein the frequency offset pre-compensation information comprises a difference value between a frequency offset pre-compensation value of a first beam and a frequency offset pre-compensation value of a second beam, the first beam is a beam currently accessed by the second communication node, and the second beam is a beam to be switched to by the second communication node.

13. The method of claim 12, wherein the difference value between the frequency offset pre-compensation value of the first beam and the frequency offset pre-compensation value of the second beam is carried in at least one of: radio resource control, RRC, signaling, media access control, MAC, signaling, or, downlink control information, DCI, signaling.

14. The method of claim 11, wherein the frequency offset pre-compensation information comprises a frequency offset pre-compensation value of a first beam and a frequency offset pre-compensation value of a second beam, the first beam is a beam currently accessed by the second communication node, and the second beam is a beam to be switched to by the second communication node.

15. The method of claim 14, wherein the frequency offset pre-compensation value of the first beam is carried in at least one of: master information block, MIB, signaling, system information block, SIB, signaling, RRC signaling, MAC signaling or DCI signaling; and
the frequency offset pre-compensation value of the second beam is carried in at least one of the RRC signaling, the MAC signaling or the DCI signaling.

16. The method of claim 11, wherein the frequency offset pre-compensation information comprises identification information of at least two beams , frequency offset pre-compensation values of the at least two beams and first identification information, and wherein the at least two beams comprise a beam currently accessed by the second communication node and a beam to be switched to by the second communication node, and the first identification information is identification information of the beam to be switched to by the second communication node.

17. The method of claim 16, wherein the identification information is a number of a beam.

18. The method of claim 16, wherein the identification information and the frequency offset pre-compensation values of the at least two beams are carried in at least one of: MIB signaling, SIB signaling, RRC signaling, MAC signaling, or, DCI signaling; and
the first identification information is carried in at least one of the RRC signaling, the MAC signaling or the DCI signaling.

19. The method of claim 11, wherein the frequency offset pre-compensation information comprises identification information and a frequency offset pre-compensation value of a reference beam, identification information of non-reference beams, difference values between the frequency offset pre-compensation value of the reference beam and frequency offset pre-compensation values of the non-reference beams and first identification information, wherein the first identification information is identification information of a beam to be switched to by the second communication node.

20. The method of claim 19, wherein the identification information is a number of a beam.

21. The method of claim 19, wherein the identification information and the frequency offset pre-compensation value of the reference beam, the identification information of the non-reference beams and the difference values between the frequency offset pre-compensation value of the reference beam and the frequency offset pre-compensation values of the non-reference beams are carried in at least one of MIB signaling, SIB signaling, RRC signaling, MAC signaling or DCI signaling; and
the first identification information is carried in at least one of the RRC signaling, the MAC signaling or the DCI signaling.

22. An information indication method, comprising:
receiving, by a second communication node, second indication information sent by a first communication node, wherein the second indication information comprises frequency offset pre-compensation information for beam switching of the second communication node.

23. The method of claim 22, wherein the frequency offset pre-compensation information comprises a difference value between a frequency offset pre-compensation value of a first beam and a frequency offset pre-compensation value of a second beam, wherein the first beam is a beam currently accessed by the second communication node, and the second beam is a beam to be switched to by the second communication node.

24. The method of claim 23, wherein the difference value between the frequency offset pre-compensation value of the first beam and the frequency offset pre-compensation value of the second beam is carried in at least one of radio resource control, RRC, signaling, media access control, MAC, signaling or downlink control information, DCI, signaling.

25. The method of claim 22, wherein the frequency offset pre-compensation information comprises a frequency offset pre-compensation value of a first beam and a frequency offset pre-compensation value of a second beam, wherein the first beam is a beam currently accessed by the second communication node, and the second beam is a beam to be switched to by the second communication node.

26. The method of claim 25, wherein the frequency offset pre-compensation value of the first beam is carried in at least one of master information block, MIB, signaling, system information block, SIB, signaling, RRC signaling, MAC signaling or DCI signaling; and
the frequency offset pre-compensation value of the second beam is carried in at least one of the RRC signaling, the MAC signaling or the DCI signaling.

27. The method of claim 22, wherein the frequency offset pre-compensation information comprises identification information of at least two beams, frequency offset pre-compensation values of the at least two beams and first identification information, wherein the at least two beams comprise a beam currently accessed by the second communication node and a beam to be switched to by the second communication node, and the first identification information is identification information of the beam to be switched to by the second communication node.

28. The method of claim 27, wherein the identification information is a number of a beam.

29. The method of claim 27, wherein the identification information and the frequency offset pre-compensation values of the at least two beams are carried in at least one of MIB signaling, SIB signaling, RRC signaling, MAC signaling or DCI signaling; and
the first identification information is carried in at least one of the RRC signaling, the MAC signaling or the DCI signaling.

30. The method of claim 22, wherein the frequency offset pre-compensation information comprises identification information and a frequency offset pre-compensation value of a reference beam, identification information of non-reference beams, difference values between the frequency offset pre-compensation value of the reference beam and frequency offset pre-compensation values of the non-reference beams and first identification information, wherein the first identification information is identification information of a beam to be switched to by the second communication node.

31. The method of claim 30, wherein the identification information is a number of a beam.

32. The method of claim 30, wherein the identification information and the frequency offset pre-compensation value of the reference beam, the identification information of the non-reference beams and the difference values between the frequency offset pre-compensation value of the reference beam and the frequency offset pre-compensation values of the non-reference beams are carried in at least one of MIB signaling, SIB signaling, RRC signaling, MAC signaling or DCI signaling; and
the first identification information is carried in at least one of the RRC signaling, the MAC signaling or the DCI signaling.

33. An information indication apparatus, comprising a processor configured to, when executing a computer program, implement the information indication method of any one of claims 1 to 32.

34. A computer-readable storage medium, which is configured to store a computer program which, when executed by a processor, implements the information indication method of any one of claims 1 to 32.
